# EUROPEAN PATENT APPLICATION

(11) **EP 2 383 741 A2**
(43) Date of publication of application: **02.11.2011**
(21) Application number: 10195876.7
(22) Date of filing: 20.12.2010
(51) Int. Cl.: G11B 27/034, G11B 27/36, H04N 5/76

(54) **Recording apparatus, recording method and video display apparatus**

(30) Priority: 27.04.2010 JP 2010102761
(71) Applicant: Kabushiki Kaisha Toshiba, Tokyo (JP)
(72) Inventor: Hamada, Tomo, Tokyo (JP)
(74) Representative: HOFFMANN EITLE

(57) **Abstract**

According to one embodiment, a recording apparatus includes a first recording module, a second recording module, an incompletion detecting module, and a playback module. The first recording module is configured to continuously record program contents of a plurality of channels received by a plurality of tuners. The second recording module is configured to record a program content based on recording instruction. The incompletion detecting module is configured to detect recording incompletion of the program content recorded by the second recording module. The playback module is configured to display a screen for receiving an instruction to recover the content where the recording incompletion has been detected, to extract a recorded content corresponding to the content where the recording incompletion has been detected from the first recording module based on the instruction to recover the content, and to play back the extracted recorded content based on timing of detection of the recording incompletion.

## Description

### Field

Embodiments described herein relate generally to a recording apparatus, a recording method and a video display apparatus that receive and record broadcast programs.

### Background

It is performed to receive broadcast programs transmitted from broadcasting stations and record them into a recording device such as a storage.

There are cases where the recording of programs (contents) is incomplete because of the occurrence of missing parts due to various factors such as poor connection and program extension.

When programs (contents) are recorded, there are cases where the recorded contents are incomplete because of the occurrence of missing parts due to various factors.

### BRIEF DESCRIPTION OF THE SEVERAL VIEWS OF THE DRAWINGS

A general configuration that implements the various features of the invention will be described with reference to the drawings. The drawings and the associated descriptions are provided to illustrate embodiments of the invention and not to limit the scope of the invention.
FIG. 1 is an exemplary block diagram showing a recording apparatus according to an embodiment;
FIG. 2 is an exemplary external view of a video display apparatus according to the embodiment showing an instruction to recover a recorded content; and
FIG. 3 is an exemplary flowchart for explaining the operation of the recording apparatus according to the embodiment.

### DETAILED DESCRIPTION

In general, according to one embodiment, a recording apparatus includes a first recording module, a second recording module, an incompletion detecting module, and a playback module. The first recording module is configured to continuously record program contents of a plurality of channels received by a plurality of tuners. The second recording module is configured to record a program content based on recording instruction, independently of the first recording module. The incompletion detecting module is configured to detect recording incompletion of the program content recorded by the second recording module. The playback module is configured to play back the program content recorded by the second recording module. The playback module is configured to display a screen for receiving an instruction to recover the content where the recording incompletion has been detected, to extract a recorded content corresponding to the content where the recording incompletion has been detected from the first recording module based on the instruction to recover the content, and to play back the extracted recorded content based on timing of detection of the recording incompletion.

Hereinafter, exemplary embodiments will be described.

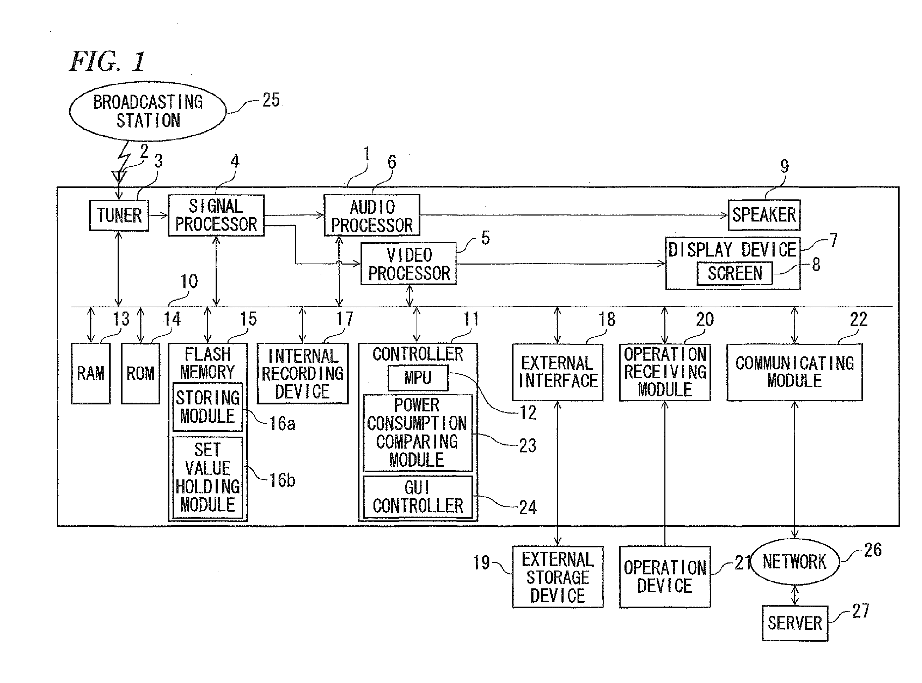

FIG. 1 is a block diagram showing a recording apparatus according to this embodiment.

Reference numeral 1 represents a video display apparatus (digital broadcast receiving apparatus). Reference numeral 2 represents an antenna. Reference numeral 3 represents a tuner. Reference numeral 4 represents a signal processor. Reference numeral 5 represents a video processor. Reference numeral 6 represents an audio processor. Reference numeral 7 represents a display device. Reference numeral 8 represents a screen. Reference numeral 9 represents a speaker.

Reference numeral 10 represents a bus. Reference numeral 11 represents a controller. Reference numeral 12 represents an MPU. Reference numeral 13 represents a RAM. Reference numeral 14 represents a ROM. Reference numeral 15 represents a flash memory. Reference numeral 16a represents a storing module. Reference numeral 16b represents a set value holding module.

Reference numeral 17 represents an internal recording device which is, for example, an internal HDD (hard disk drive) or an internal SSD (solid state disk: a storage device using a flash memory which is a semiconductor storage element).

Reference numeral 18 represents an external interface. Reference numeral 19 represents an external storage device connected to the outside through the external interface 18. The external interface 18 is also an HDD, an SSD or the like.

Reference numeral 20 represents an operation receiving module. Reference numeral 21 represents an operation device. Reference numeral 22 represents a communicating module. Reference numeral 23 represents a power consumption comparing module, Reference numeral 24 represents a GUI controller. Reference numeral 25 is a broadcasting station. Reference numeral 26 represents a network. Reference numeral 27 represents a server.

The video display apparatus 1 is capable of performing recording onto each of the internal recording device 17 and the external storage device 19.

Although not specifically shown, the tuner 3 includes multiple tuners so that it is capable of receiving multiple channels.

The internal recording device 17 has HDDs for time-shift recording and for normal recording. On the HDD for time-shift recording, for example, programs of the past approximately 26 hours of up to eight channels can be temporarily stored, that is, programs of eight channels can be "wholly recorded" for 26 hours.

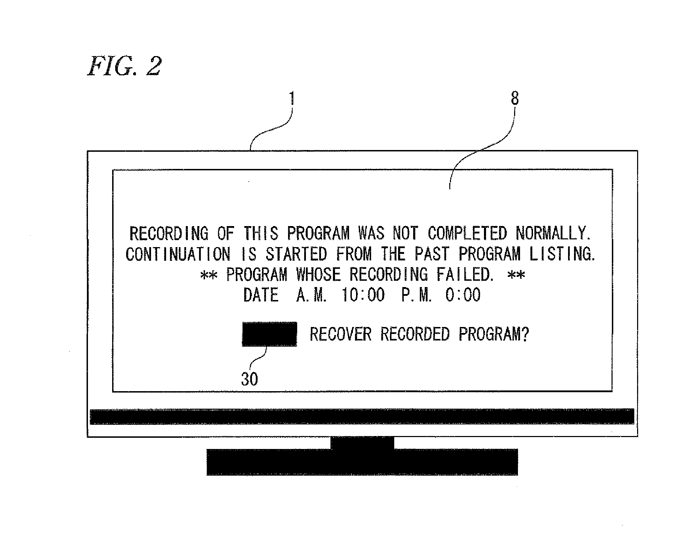

FIG. 2 is an external view of a video display apparatus according to the embodiment showing an example in which an instruction to recover a recorded content is displayed so as to be inputtable. This video display apparatus includes a recording apparatus as described above.

In this embodiment, program contents of multiple channels received by multiple tuners are continuously recorded into the internal recording device 17.

Moreover, the external storage device 19 is provided that records a program content to be recorded based on programmed recording, independently of the internal recording device 17. The recording instruction in this embodiment is not particularly limited to programmed recording.

In this embodiment, recording incompletion of the program content recorded by the external storage device 19 is detected and a notification thereof is made.

This notification of recording incompletion is displayed on the display screen 8 of the video display apparatus 1.

In this embodiment, a message "Recording of this program was not completed normally. Continuation is started from the past program listing. ** Program whose recording failed. ** Date A.M. 10:00 P.M. 0:00" is displayed.

Moreover, a message "Recover recorded program?" is displayed.

When a notification of recording incompletion is made, an instruction to recover the recorded content is displayed so as to be inputtable. In this embodiment, a recovery input button 30 is displayed, and the user operates a non-illustrated remote control, keyboard or the like and presses the recovery input button 30, thereby inputting an instruction to recover the recorded content.

In response to the recording content recovery instruction, a content corresponding to the content where the recording incompletion has been detected is extracted from the internal recording device 17. Then, the extracted content is played back at the time when the incompletion is detected.

In this embodiment, for example, up to a missing part of the recorded content, the content is played back from the external storage device 19, and from the missing part, the corresponding content is extracted from the "wholly recorded" content and played back.

When the target recording apparatus is changed as described above, this is indicated on the screen for several seconds to notify the user that the recording failed.

The following may also be performed: The recorded content recovery instruction display is provided for several seconds. Then, the processing of deleting the original content and dubbing the wholly recorded content is started concurrently with the change of the program when the recording input button is pressed while the recoded content recovery instruction display is being provided. Thus, the missing program content is reconstructed.

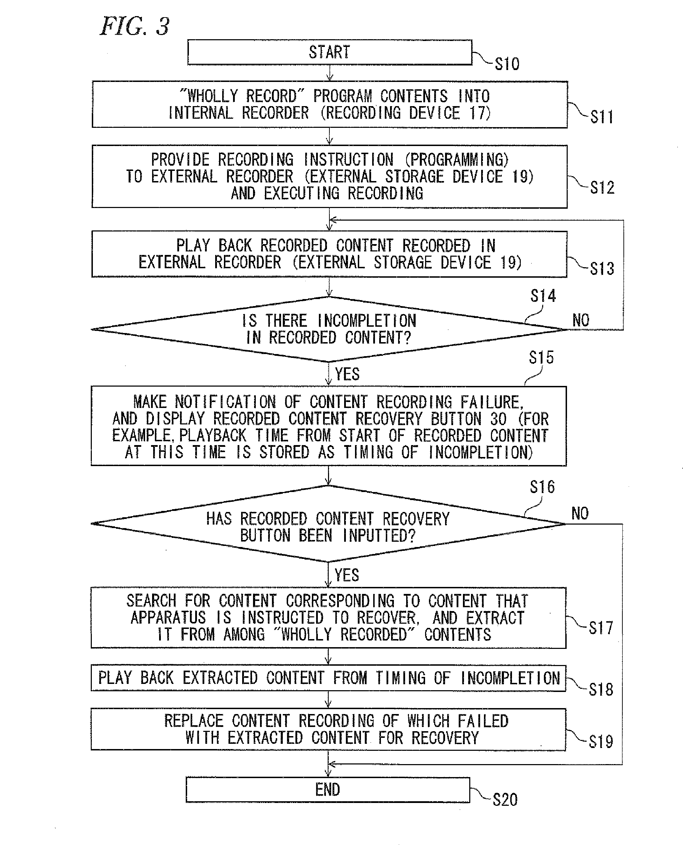

FIG. 3 is a flowchart for explaining the operation of the recording apparatus according to the embodiment.

Reference numeral S10 represents a start step of this operation. Then, the process proceeds to the step denoted by reference numeral S 11.

Reference numeral S11 represents a step of "wholly recording" program contents into the internal recorder (recording device 17). Then, the process proceeds to the step denoted by reference numeral S12.

Reference numeral S12 represents a step of providing a recording instruction (programming) to the external recorder (external storage device 19) and executing recording. Then, the process proceeds to the step denoted by reference numeral S 13.

Reference numeral S13 represents a step of playing back the recorded content recorded in the external recorder (external storage device 19). Then, the process proceeds to the step denoted by reference numeral S14.

Reference numeral S14 represents a step of determining whether there is incompletion (missing part of the content) in the recorded content or not. This determination is made, for example, by the controller 11. When it is determined that there is incompletion in the recorded content, the process proceeds to the step denoted by reference numeral S15 (Yes). When it is not determined that there is incompletion in the recorded content, the process proceeds to the step denoted by reference numeral S 13 to repeat the above-described processing (No).

Reference numeral S15 represents a step of making a notification of content recording failure and displaying the recorded content recovery button 30. For example, the playback time from the start of the recorded content at this time is stored as the timing of incompletion. Then, the process proceeds to the step denoted by reference numeral S16.

Reference numeral S 16 represents a step of determining whether or not the recorded content recovery button 30 has been operated by the user and input has been made. When it is determined that the recorded content recovery button 30 has been operated and recovery has been inputted, the process proceeds to the step denoted by reference numeral S17 (Yes). When it is not determined that recovery has been inputted, the process proceeds to the step denoted by reference numeral S20 (No).

Reference numeral S 17 represents a step of searching for the content corresponding to the content that the apparatus is instructed to recover and extracting it from among the "wholly recorded" contents. Then, the process proceeds to the step denoted by reference numeral S 18.

Reference numeral S 18 represents a step of playing back the extracted content from the timing of incompletion. Then, the process proceeds to the step denoted by reference numeral S 19.

Reference numeral S 19 represents a step of replacing the content whose recording failed with the extracted content for recovery. Then, the process proceeds to the step denoted by reference numeral S20.

Reference numeral S20 represents an end step where the processing in this operation is ended.

By the structure as described above, in this embodiment, the user can watch a recorded content having no missing part without being aware of the continuation of the missing program.

Moreover, the recovery processing is running on the background while a recorded content having no missing part is being watched. For this reason, it is possible that the content is automatically recovered while a recorded content having no missing part is being watched.

Consequently, an effect is obtained that a recorded content where a missing part occurs due to various factors can be recovered.

While certain embodiments have been described, these embodiments have been presented by way of example only, and are not intended to limit the scope of the invention. Indeed, the novel apparatus and method described herein may be embodied in a variety of other forms; furthermore, various omissions, substitutions and changes in the form of the apparatus and method described herein may be made without departing from the sprit of the invention. The accompanying claims and their equivalents are intended to cover such forms or modifications as would fall within the scope and sprit of the invention.

Further aspects and embodiments of the invention, as denoted with "A" or "aspect", are listed hereinafter.
A1. A recording apparatus comprising:
   a first recording module configured to continuously record program contents of a plurality of channels received by a plurality of tuners;
   a second recording module configured to record a program content based on recording instruction, independently of the first recording module;
   an incompletion detecting module configured to detect recording incompletion of the program content recorded by the second recording module; and
   a playback module configured to play back the program content recorded by the second recording module,
   wherein the playback module is configured to display a screen for receiving an instruction to recover the content where the recording incompletion has been detected, to extract a recorded content corresponding to the content where the recording incompletion has been detected from the first recording module based on the instruction to recover the content, and to play back the extracted recorded content based on timing of detection of the recording incompletion.
A2. The apparatus of aspect A1 wherein the instruction to recover the content is received from a user.
A3. The apparatus of aspect A1 or A2, wherein the content where the recording incompletion has been detected is replaced with the recorded content extracted from the first recording module.
A4. The apparatus of any one of aspects A1 to A3, wherein the playback module is configured to display a screen for notifying the recording incompletion in conjunction with the playback of the recorded content.
A5. The apparatus of any one of aspects A1 to A4, wherein the timing of detection of the recording incompletion is detected based on a playback time of the recorded content.
A6. A recording method comprising:
   continuously recording program contents of a plurality of channels by a first recording module;
   recording a program content based on recording instruction by a second recording module, independently of the first recording module;
   playing back the program content recorded by the second recording module;
   detecting recording incompletion of the program content recorded by the second recording module;
   displaying a screen for receiving an instruction to recover the content where the recording incompletion has been detected; and
   extracting a recorded content corresponding to the content where the recording incompletion has been detected, from the first recording module based on the instruction to recover the content, and playing back the extracted recorded content based on timing of detection of the recording incompletion.
A7. The method of aspect A6, further comprising: receiving the instruction to recover the content from a user.
A8. The method of aspect A6 or A7, further comprising:
   replacing the content where the recording incompletion has been detected with the recorded content extracted from the first recording module.
A9. The method of any one of aspects A6 to A8, further comprising:
   displaying a screen for notifying the recording incompletion in conjunction with the playback of the recorded content.
A10. A video display apparatus comprising:
   a first recording module configured to continuously record program contents of a plurality of channels received by a plurality of tuners;
   a second recording module configured to record a program content based on recording instruction, independently of the first recording module;
   a displaying module configured to display at least the program content recorded by the first recording module or the second recording module;
   an incompletion detecting module configured to detect recording incompletion of the program content recorded by the second recording module; and
   a playback module configured to display a screen for receiving an instruction to recover the content where the recording incompletion has been detected on the displaying module, to extract a recorded content corresponding to the content where the recording incompletion has been detected from the first recording module based on the instruction to recover the content, and to play back the extracted recorded content based on timing of detection of the recording incompletion.

## Claims

1. An apparatus comprising:
a first recording module configured to continuously record program contents of a plurality of channels received by a plurality of tuners;
a second recording module configured to record a program content based on recording instruction, independently of the first recording module;
an incompletion detecting module configured to detect recording incompletion of the program content recorded by the second recording module; and
a playback module configured to display a screen for receiving an instruction to recover the content where the recording incompletion has been detected, to extract a recorded content corresponding to the content where the recording incompletion has been detected from the first recording module based on the instruction to recover the content, and to play back the extracted recorded content based on timing of detection of the recording incompletion.

2. The apparatus of claim 1,
wherein said apparatus is a recording apparatus and **characterized by** a playback module configured to play back the program content recorded by the second recording module.

3. The apparatus of claim 2, wherein the instruction to recover the content is received from a user.

4. The apparatus of claim 2 or 3, wherein the content where the recording incompletion has been detected is replaced with the recorded content extracted from the first recording module.

5. The apparatus of any one of claims 2 to 4, wherein the playback module is configured to display a screen for notifying the recording incompletion in conjunction with the playback of the recorded content.

6. The apparatus of any one of claims 2 to 5, wherein the timing of detection of the recording incompletion is detected based on a playback time of the recorded content.

7. A recording method comprising:
continuously recording program contents of a plurality of channels by a first recording module;
recording a program content based on recording instruction by a second recording module, independently of the first recording module;
playing back the program content recorded by the second recording module;
detecting recording incompletion of the program content recorded by the second recording module;
displaying a screen for receiving an instruction to recover the content where the recording incompletion has been detected; and
extracting a recorded content corresponding to the content where the recording incompletion has been detected, from the first recording module based on the instruction to recover the content, and playing back the extracted recorded content based on timing of detection of the recording incompletion.

8. The method of claim 7, further comprising:
receiving the instruction to recover the content from a user.

9. The method of claim 7 or 8, further comprising:
replacing the content where the recording incompletion has been detected with the recorded content extracted from the first recording module.

10. The method of any one of claims 7 to 9, further comprising:
displaying a screen for notifying the recording incompletion in conjunction with the playback of the recorded content.

11. The apparatus of claim 1, wherein said apparatus is a video display apparatus further comprising:
a displaying module configured to display at least the program content recorded by the first recording module or the second recording module; and
said playback module being configured to display said screen for receiving said instruction to recover the content where the recording incompletion has been detected on the displaying module.
